# EUROPÄISCHE PATENTANMELDUNG

(11) **EP 1 014 720 A2**
(43) Veröffentlichungstag der Anmeldung: **28.06.2000**
(21) Anmeldenummer: 99124904.6
(22) Anmeldetag: 14.12.1999
(51) Int. Cl.: H04N 7/035

(54) **Elektronische Schaltungseinrichtung zum Verarbeiten von Zusatzdaten**

(30) Priorität: 21.12.1998 CH 252798
(71) Anmelder: TWIX EQUIPMENT AG, CH-8132 Egg b. Zürich (CH)
(72) Erfinder: Zeller, Matthias, 5426 Langnau (CH)
(74) Vertreter: Frei, Alexandra Sarah

(57) **Zusammenfassung**

Die Erfindung betrifft Verfahren zum Bereitstellen von Informationen an einen Benutzer auf dem Gebiet der Telekommunikation, wobei Hilfsinformationen von einem Sender gesendet und beim Benutzer von einem Tuner (2,20) eines TV-Geräts (1) oder eines Videorecorders (15) empfangen werden, diese Hilfsinformationen von einem TXT-Decoder (5) einer Schaltungseinrichtung (4) erkannt und in eine zentrale Recheneinheit (6) mit Datenspeicher (7) und Betriebssystemspeicher (8) der Schaltungseinrichtung (4) eingelesen werden, zu Benutzerinformationen aufbereitete Hilfsinformationen von einen TXT-Inserter (9) der Schaltungseinrichtung (4) ausgegeben und an einen TXT-Decoder (11) eines TV-Geräts (1) geleitet und auf einem Monitor (12) eines TV-Geräts (1) dargestellt werden.

## Beschreibung

Die Erfindung liegt auf dem Gebiet der Telekommunikation und betrifft ein Verfahren und eine das Verfahren ausführende elektronische Schaltungseinrichtung gemäss der Definition der Patentansprüche.

Bei der heutigen Vielfalt bei der TV-Kommunikation hat es der Benützer nicht mehr leicht, sich mir dem geballten Angebot auseinanderzusetzen. Genau dies jedoch ist nicht nur unerwünscht, es ist auch unzumutbar. Wie soll sich ein Entspannung suchender TV-Konsument zwischen Dutzenden von Sendern und deren Programmen, Programmankündigungen und anderen gutgemeinten Services zurechtfinden, wenn ihm nicht die adäquaten Mittel dazu geboten werden? Heute sind dies das gedruckte Programmheft, oft nicht aktuell, und die wesentlich anspruchsvollere, sehr umständliche TV-Information via Teletext, usw.. Alle möglichen Lösungsansätze scheiterten jedoch an der geringen Akzeptanz. Zur Zeit ist keine Lösung bekannt, die sich beim Publikum so richtig durchsetzen konnte.

Diesem Umstand abzuhelfen ist Aufgabe der Erfindung. Insbesondere soll diese Aufgabe auf einfache, kostengünstige und mit bestehenden Standards kompatible Art und Weise gelöst werden.

Die erfolgt durch die Erfindung gemäss der Definition der Patentansprüche.

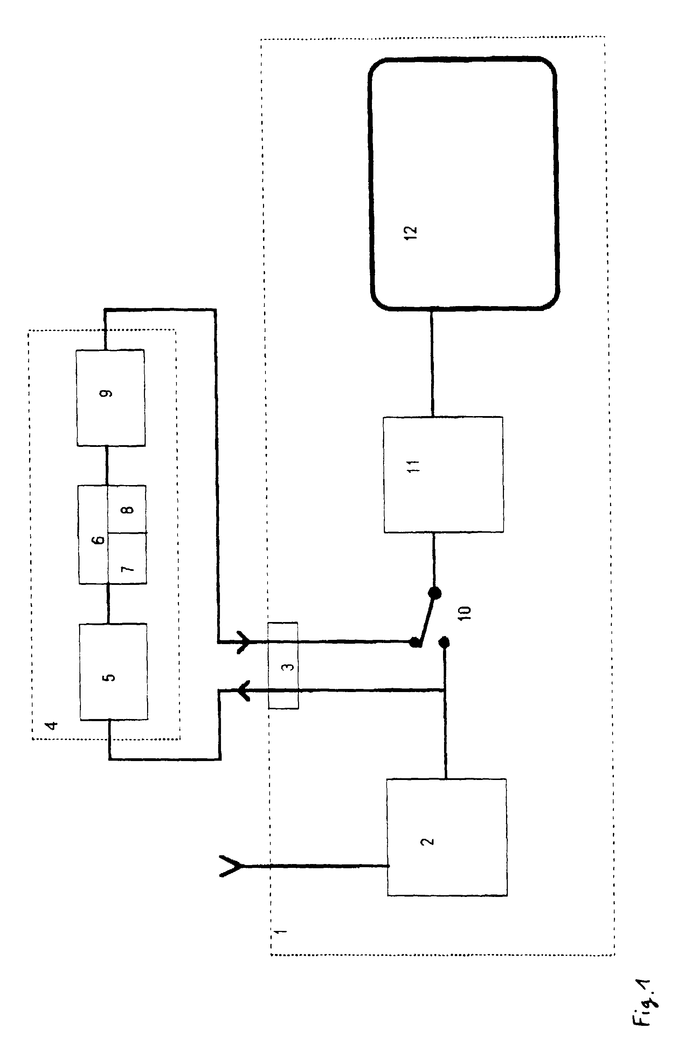

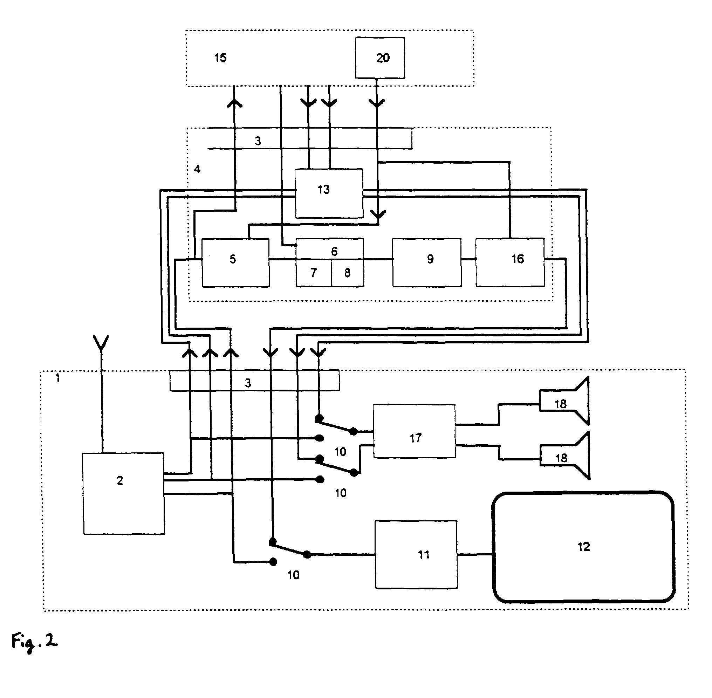

Die Erfindung wird anhand der folgenden Figuren 1 und 2 im Detail erläutert.
- Fig. 1: zeigt einen Teil einer ersten beispielhaften Ausführungsform einer Schaltungseinrichtung zur Durchführung des Verfahrens unter Verwendung eines TV-Geräts,
- Fig. 2: zeigt einen Teil einer weiteren beispielhaften Ausführungsform einer Schaltungseinrichtung zur Durchführung des Verfahrens unter Verwendung eines TV-Geräts und eines Videorecorders,

Das Verfahren besteht darin, Hilfsinformationen zu TV von einem bevorzugten Sender über die Austastlücke zu empfangen und mittels einer elektronischen Schaltungseinrichtung als Benützerinformationen bereitzustellen. Im folgenden wird beispielhaft die TV-Kommunikation diskutiert, andere Arten der Telekommunikation sind bei Kenntnis der vorliegenden Erfindung möglich.

Die Fig. 1 und 2 zeigen beispielhafte Ausführungsformen der elektronischen Schaltungseinrichtung 4 in Verwendung mit einem TV-Gerät 1 und einem Videorecorder 15. Die Schaltungseinrichtung 4 lässt sich über genormte elektronische Verbindungen, bspw. über einen SCART-Anschluss 3 an einem solchen TV-Gerät 1 und/oder an einem solchen Videorecorder 15 anschliessen. Fast alle gängigen TV-Geräte und Videorecorder sind mit einem SCART-Anschluss ausgestattet. Bei Kenntnis der Erfindung lassen sich auch andere elektronische Verbindungen verwenden.

Zum Empfang benötigt die Schaltungseinrichtung 4 mindestens einen Tuner. Sie funktioniert aber auch mit zwei oder mehr Tunern. Die Wahl des Tuners ist frei. Es kann bspw. der Tuner eines TVs, eines Videorecorders oder auch anderes Tunergerät wie eine Tuner-Computerkarte, usw. verwendet werden. Auch kann der Tuner in der Schaltungseinrichtung selbst angeordnet sein. Gemäss Fig. 1 ist dieser Empfangstuner der Tuner 2 eines TV-Geräts 1, gemäss Fig. 2 ist dieser Empfangstuner der Tuner 2 des TV-Geräts 1 und/oder der Tuner 20 eines Videorecorders 15.

Die Schaltungseinrichtung 4 empfängt somit Hilfsinformationen über einen Empfangstuner und stellt sie als Benützerinformationen zur Verfügung. Dies erfolgt vorteilhafterweise über den TXT-Decoder 11 vom TV-Gerät 1. Dies hat den Vorteil, dass die Benützerinformationen auf dem Monitor 12 vom TV-Gerät 1 zur Verfügung gestellt werden. Gemäss Fig. 1 sind Ein- und Ausgänge der Schaltungseinrichtung 4 direkt an einen SCART-Anschluss 3 des TV-Geräts 1 angeschlossen, gemäss Fig. 2 ist die Schaltungseinrichtung 4 mit ihren Ein- und Ausgängen zwischen dem SCART-Anschluss 3 des TV-Geräts 1 und demjenigen des Videorecorders 15 angeschlossen.

Die Schaltungseinrichtung 4 empfängt über einen Tuner 2,20 im TV-Gerät 1 und/oder im Videorecorder 15 Hilfsinformationen. Hierzu muss die Schaltungseinrichtung 4 Hilfsinformationen als solche erkennen. Vorzugsweise geschieht dies durch Erkennen von genormten Hilfsinformationen wie sie bspw. als NexTView, Teletext, usw. von mehreren Sendern angeboten werden. Dies erfolgt über einen TXT-Decoder 5 der Schaltungseinrichtung 4. Vorteilhaft werden solche in offenen Standards frei zugänglich angebotene Hilfsinformationen von der Schaltungseinrichtung verwendet. Solche Hilfsinformationen lassen sich von diesem TXT-Decoder 5 bspw. über die Austastlücke der Bildsteuerung erkennen und in eine zentrale Recheneinheit 6 mit Datenspeicher 7 und Betriebssystemspeicher 8 der Schaltungseinrichtung 4 einlesen. Die Verwendung solcher normierter Hilfsinformationen ist keine Bedingung, aber sehr praktisch und kostengünstig. Bei Kenntnis der Erfindung lassen sich auch andere, nicht normierte Hilfsinformationen in die Schaltungseinrichtung 4 einlesen.

Das Einlesen von NexTView oder Teletext Hilfsinformationen in die Schaltungseinrichtung 4 erfolgt somit automatisch und permanent, solange der Empfangstuner eingeschaltet ist und einen solche Hilfsinformationen versendenden Sender empfängt. Bei den jetzigen Übertragungsstandards und der von Sendern angebotenen Hilfsinformationsdichte ist die Schaltungseinrichtung innert Kürze aktualisiert. Vorteilhaft an einer zwei Tuner-Lösung wie sie bspw. in Fig. 2 gezeigt wird, ist , dass ein Tuner vom TV-Gerät 1 ein beliebiges TV-Programm empfängt, während ein Tuner 20 von Videorecorder 15 als Empfangstuner von Hilfsinformationen dient und automatisch und permanent einen Hilfsinformationen versendenden Sender empfängt.

Diese in die Schaltungseinrichtung 4 eingelesenen Hilfsinformationen werden aufbereitet und über einen TXT-Inserter 9 als Benützerinformationen zur Verfügung gestellt. Die Schaltungseinrichtung 4 simuliert somit einen Sender. Mehr noch, die Schaltungseinrichtung 4 erlaubt eine Aufbereitung gemäss persönlicher Profile. Damit ist es möglich, Benützerinformationen wie die Übersicht über die aktuellen Sendungen, die Art der Sendungen (nur Sportsendungen, nur Spielfilme, usw.) individuell aufzurufen und zusammenzustellen.

Von der Schaltungseinrichtung 4 gesendete Benützerinformationen werden an den TXT-Decoder 11 des TV-Geräts geleitet und auf dem Monitor 12 des TV-Geräts 1 dargestellt. Der TXT-Decoder 11 des TV-Geräts 1 ist mit dem Tuner 2 des TV-Geräts 1 verbunden. Um anstelle des augenblicklich vom Tuner 2 empfangenen TV-Programms Benützerinformationen der Schaltungseinrichtung 4 an den TXT-Decoder 11 des TV-Geräts 1 zu leiten, wird vorteilhafterweise ein Schalter, bspw. der in fast allen gängigen TV-Geräten eingebaute AV-Schalter 10, verwendet. Die ist auf einfache Art und Weise über die Fernbedienung des TV-Geräts 1 möglich. Bspw. wird durch einmaliges Betätigen einer Fernbedienungstaste "AV-Schalter" der AV-Schalter 10 des TV-Geräts 1 betätigt, und durch Betätigen einer Fernbedienungstaste "Teletext" werden daraufhin anstelle des normalen Teletextes die Benützerinformationen auf dem Monitor dargestellt. Auf die gleiche einfache Art und Weise lässt sich nun mittels der Fernbedienung des TV-Geräts 1 der Inhalt der Schaltungseinrichtung 4 vom Benützer individuell aufrufen oder auswählen und auf dem Monitor 10 darstellen. Auch lassen sich auf diese einfache Art und Weise individuelle Profile in die Schaltungseinrichtung 4 zusammenstellen und speichern. Ferner wird bei diesem Abrufen der Benützerinformationen vorteilhafterweise der Ton des augenblicklich vom Tuner 2 empfangenen Programms an die Lautsprecher vom TV-Gerät 1 geleitet, was dem Benützer bei der Orientierung hilft.

Die Schaltungseinrichtung kann mit fast allen bestehenden TV-Geräten und Videorecordern betrieben werden. Insbesondere lässt sich die Schaltungseinrichtung einfach über mindestens einen SCART-Anschluss verbinden. Auch lässt sich die Fernbedienung des TV-Geräts zum Abrufen der Benützerinformationen verwenden. Bedingung an TV-Geräte ist, dass sie einen SCART-Anschluss und einen TXT-Decoder aufweisen. Diese Bedingung wird aber von fast allen heutigen TV-Geräten erfüllt.

Die Schaltungseinrichtung ist ausserdem einzeln adressierbar. So können spezifische Hilfsinformationen an eine bestimmte (numerierte) Schaltungseinrichtung gesendet werden. Eine solche individuell adressierte Schaltungseinrichtung erlaubt die Versendung eines oder mehrerer persönlichen Profile. So kann je nach individuellem Zuschauerwunsch eine spezifische Benützerinformation, wie die Ankündigung einer Lieblingssendung "Achtung Rio Bravo beginnt in 5 min. im ersten Programm" etc. als Hilfsinformation adressiert an die Schaltungseinrichtung 4 übermittelt werden.

In der Ausführungsform gemäss Fig. 2 ist die Schaltungseinrichtung zwischen dem SCART-Anschluss 3 vom TV-Gerät 1 und denjenigen vom Videorecorder 15 geschaltet. Alle Informationen werden somit durch die Schaltungseinrichtung 4 geschlauft. Hierfür besitzt die Schaltungseinrichtung einen Video-Schalter 16 und einen Audio-Schalter 13. Dies ermöglicht einen permanenten Empfang von der Schaltungseinrichtung 4 von Hilfsinformationen über den Tuner 20 vom Videorecorder 15, und es ermöglicht nach Schaltung vom AV-Schalter 10 des TV-Geräts 1, ein Darstellen von Benutzerinformationen aus der Schaltungseinrichtung 4 auf dem Monitor 12 bei gleichzeitigem Übertragen vom Ton des augenblicklich vom Tuner 2 des TV-Geräts empfangenen Programms an den Audioverstärker 17 und die Lautsprecher 18 vom TV-Gerät 1.

## Patentansprüche

1. Verfahren zum Bereitstellen von Informationen an einen Benutzer auf dem Gebiet der Telekommunikation, dadurch gekennzeichnet, dass Hilfsinformationen von einem Sender gesendet und beim Benutzer von einem Tuner (2,20) empfangen werden, dass diese Hilfsinformationen in eine Schaltungseinrichtung (4) eingelesen und zu Benutzerinformationen aufbearbeitet werden, dass diese Benutzerinformationen über einen TXT-Inserter (9) an einen TXT-Decoder (11) geleitet und auf einem Monitor (12) dargestellt werden.

2. Verfahren gemäss Anspruch 1, dadurch gekennzeichnet, dass der TXT-Decoder (11) und Monitor (12) eines TV-Geräts (1) verwendet werden.

3. Verfahren gemäss Anspruch 1 oder 2, dadurch gekennzeichnet, dass als Hilfsinformationen empfangender Tuner der Tuner (2) eines TV-Geräts (1) oder der Tuner (20) eines Videorecorders (15) verwendet wird.

4. Verfahren gemäss Anspruch 1, dadurch gekennzeichnet, dass in der Schaltungseinrichtung (4) Hilfsinformationen von einem TXT-Decoder (5) erkannt und in eine zentrale Recheneinheit (6) mit Datenspeicher (7) und Betriebssystemspeicher (8) eingelesen werden und dass zu Benutzerinformationen aufbereitete Hilfsinformationen von einen TXT-Inserter (9) der Schaltungseinrichtung (4) ausgegeben werden.

5. Verfahren gemäss einem der Ansprüche 1 bis 4, dadurch gekennzeichnet, dass NexTView oder Teletext Hilfsinformationen in die Schaltungseinrichtung (4) eingelesen werden.

6. Verfahren gemäss einem der Anspruüche 1 bis 5, dadurch gekennzeichnet, dass Hilfsinformationen in die Schaltungseinrichtung (4) automatisch und permanent, eingelesen werden, solange der Hilfsinformationen empfangende Tuner (2,20) eingeschaltet ist und einen Hilfsinformationen versendenden Sender empfängt.

7. Verfahren gemäss einem der Ansprüche 2 bis 6, dadurch gekennzeichnet, dass die Schaltungseinrichtung (4) über mindestens einen SCART-Anschluss (3) zwischen den Hilfsinformationen empfangenden Tuner (2,20) und den TXT-Decoder (11) geschaltet wird.

8. Verfahren gemäss einem der Ansprüche 2 bis 7, dadurch gekennzeichnet, dass Benützerinformationen von der Schaltungseinrichtung (4) durch Schalten eines AV-Schalters (10) des TV-Geräts (1) vom TXT-Inserter (9) der Schaltungseinrichtung (4) an den TXT-Decoder (11) des TV-Geräts (1) geleitet werden.

9. Verfahren gemäss einem der Ansprüche 2 bis 8, dadurch gekennzeichnet, dass ein Darstellen von Benutzerinformationen aus der Schaltungseinrichtung (4) auf einem Monitor (12) bei gleichzeitigem Übertragen vom Ton des augenblicklich vom Tuner empfangenen Programms an Lautsprecher (18) erfolgt.

10. Schaltungseinrichtung (4) zur Verwendung im Verfahren gemäss Anspruch 1, dadurch gekennzeichnet, dass sie einen TXT-Decoder (5) zum Erkennen von Hilfsinformationen aufweist, dass sie eine zentrale Recheneinheit (6) mit Datenspeicher (7) und Betriebssystemspeicher (8) zum Einlesen und Aufbereiten der Hilfsinformationenen zu Benutzerinformationen aufweist und dass sie einen TXT-Inserter (9) zum Ausgeben der Benutzerinformationen aufweist.
